# EUROPEAN PATENT SPECIFICATION

(11) **EP 4 242 665 B1**
(45) Date of publication and mention of the grant of the patent: **06.05.2026**
(21) Application number: 23160694.8
(22) Date of filing: 08.03.2023
(51) Int. Cl.: G01N 35/00, G01N 35/02, B01L 7/00

(54) **SAMPLE ANALYZER**
PROBENANALYSEGERÄT
ANALYSEUR D'ÉCHANTILLONS

(30) Priority: 11.03.2022 CN 202210243007
(43) Date of publication of application: 13.09.2023
(73) Proprietor: Shenzhen New Industries Biomedical Engineering Co., Ltd., Shenzhen, Guangdong 518122 (CN)
(72) Inventor: RAO, Wei, Shenzhen, Guangdong, 518122 (CN); YIN, Li, Shenzhen, Guangdong, 518122 (CN); TANG, Junhui, Shenzhen, Guangdong, 518122 (CN); ZHU, Liang, Shenzhen, Guangdong, 518122 (CN); HU, Yi, Shenzhen, Guangdong, 518122 (CN); YI, Wanguan, Shenzhen, Guangdong, 518122 (CN); TONG, Shuai, Shenzhen, Guangdong, 518122 (CN); LI, Jiang, Shenzhen, Guangdong, 518122 (CN)
(74) Representative: Berggren Oy

(56) References cited:
- EP-A2- 0 745 855
- WO-A1-2021/147187
- CN-A- 109 061 210
- CN-A- 113 466 477

## Description

### Cross-Reference to Related Application

The disclosure claims the priority to Chinese Patent Application No. CN2022102430070, filed to the Chinese Patent Office on March 11, 2022 and entitled "Sample Analyzer".

### Technical Field

The present invention relates to a technical field of medical instruments, and in particular, to a sample analyzer.

### Background

A sample analyzer may test substances, such as antibodies and antigens, contained in samples such as blood. In general, an empty reaction vessel is put into the sample analyzer, then a sample and a target reagent are added into the reaction vessel, steps such as uniform mixing, incubation, and cleaning and separation are performed, and finally, a signal reagent is added into the reaction vessel to measure an optical signal or an electric signal, so as to realize the measurement and analysis of an antibody and an antigen in the sample.

A test flux is an important parameter for measuring the working efficiency of the sample analyzer, the test flux may be defined to be the number of reaction vessels, which are tested by the sample analyzer within a unit time, and the test flux is proportional to the number of the tested reaction vessels. For a traditional sample analyzer, in order to ensure a relatively large flux, it usually has the defect of a relatively large volume.

Examples of a sample analyzer according to the prior art are known from CN 113466477 A, CN 109061210 A, WO 2021147187 A1 and EP 0745855 A2.

### Summary

One technical problem to be solved by the present invention is how to reduce the volume and to improve the test flux of a sample analyzer.

The invention is as defined in claim 1. Advantageous further developments of the invention are set forth in the dependent claims.

One technical effect of one embodiment of the present invention is that: the incubation mechanism and the uniform mixing mechanism are independent of each other, so as to eliminate a direct physical connection relationship therebetween. In this way, on one hand, when the two grippers input or output reaction vessels on the carrying member, interference can be eliminated, thereby avoiding that the two grippers can only take the form of sequential movement due to the interference, thus eliminating a "queue waiting" time, ensuring that the two grippers can move at the same time, and improving the working efficiency of the grippers, such that the number of reaction vessels, which are input to and output from the carrying member within the unit time, is increased, and finally the test flux is improved. Moreover, the volumes of the independently arranged incubation mechanism and the uniform mixing mechanism are relatively reduced, thereby reducing the volume of the entire sample analyzer. By means of providing the transport station and the uniform mixing station, the input and uniform mixing procedures of different reaction vessels on the carrying member can be carried out independently at the same time, and the output and uniform mixing procedures of different reaction vessels on the carrying member can also be carried out independently at the same time, such that the "queue waiting" time between two adjacent reaction vessels can be shortened, and an interval time of the two adjacent reaction vessels for arriving at the uniform mixing station is compressed, thereby shortening the time for inputting or outputting the two adjacent reaction vessels to and from the carrying member, and finally, the test flux of the sample analyzer is improved.

### Brief Description of the Drawings

Fig. 1 is a schematic structural top view of a sample analyzer according to an embodiment; and
Fig. 2 is a partial schematic structural diagram of the sample analyzer shown in Fig. 1.

### Detailed Description of the Embodiments

In order to facilitate the understanding of the present invention, the present invention will be described more fully hereinafter with reference to the accompanying drawings. Preferred embodiments of the present invention are given in the accompanying drawings. However, the present invention may be implemented in many different forms and is not limited to the embodiments described herein. On the contrary, the purpose of providing these embodiments is to make the understanding of the invention of the present invention more thorough and comprehensive.

It should be noted that, when an element is referred to as being "fixed to" another element, it may be directly on the other element or there may also be an intervening element. When an element is considered to be "connected" to another element, it may be directly connected to the other element or there may also be an intervening element at the same time. The terms "inner", "outer", "left", "right" and the like used herein are for illustrative purposes only and are not intended to indicate unique embodiments.

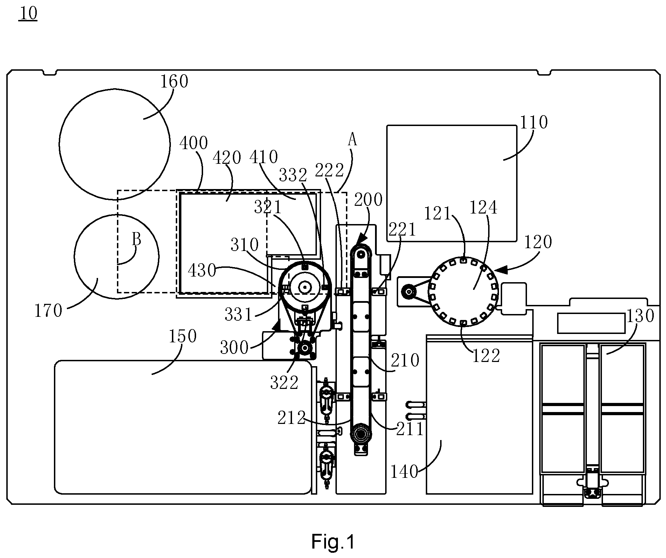

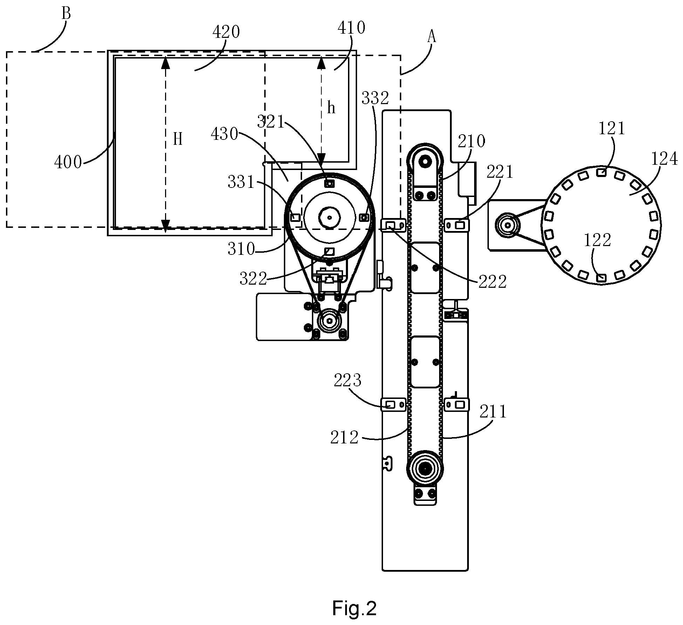

Referring to Fig. 1 and Fig. 2, a sample analyzer 10 provided in an embodiment of the present invention includes a storage mechanism 110, a conveying mechanism 120, an accommodation mechanism 130, a sample bin 140, a carrying mechanism 200, a reagent bin 150, a uniform mixing mechanism 300, an incubation mechanism 400, a cleaning mechanism 160, a measurement mechanism 170, a first gripper, a second gripper, and a transfer gripper. With the carrying mechanism 200 as a reference, the storage mechanism 110, the conveying mechanism 120, the accommodation mechanism 130 and the sample bin 140 may be located on the right side of the carrying mechanism 200, and the reagent bin 150, the uniform mixing mechanism 300, the incubation mechanism 400, the cleaning mechanism 160 and the measurement mechanism 170 may be located on the left side of the carrying mechanism 200, such that the overall mechanism distribution is in a pipeline layout, and thus the operation efficiency is high.

In some embodiments, the storage mechanism 110 is used for storing empty reaction vessels, the sample bin 140 is used for storing samples, the accommodation mechanism 130 is used for accommodating disposable suction nozzles, the storage mechanism 110 is located on the front side of the conveying mechanism 120, and the sample bin 140 and the accommodation mechanism 130 may be located on the rear side of the conveying mechanism 120. The conveying mechanism 120 includes a belt driving assembly and a conveying tray 124, which are connected to each other, the conveying tray 124 may be of a disk-shaped structure, a plurality of containing holes are formed in the edge of the conveying tray 124, the containing holes may be evenly arranged at intervals along the same circumference, and the empty reaction vessels are placed in the containing holes, such that the conveying tray 124 plays a role in carrying the reaction vessels. The belt driving assembly is used for driving the conveying tray 124 to rotate, the conveying mechanism 120 has an in-out station 121 and a sample station 122, both the in-out station 121 and the sample station 122 may be arranged at intervals in the rotation direction of the conveying tray 124, and there is one in-out station 121. In this way, an in-out time of the reaction vessel is equal to a sample loading time, and a waiting time is eliminated, therefore the speed is improved. There may be a plurality of sample stations 122, for example, thereby may be 5 sample stations 122. When the conveying tray 124 rotates, the conveying tray 124 may drive the reaction vessel to move between the in-out station 121 and the sample station 122.

During work, the conveying tray 124 may move clockwise, firstly, the transfer gripper removes the reaction vessel in the storage mechanism 110, and inputs the reaction vessel from the in-out station 121 to the conveying tray 124; and then, the conveying tray 124 rotates by 180° to convey the reaction vessel from the in-out station 121 to the sample station 122, and the sample in the sample bin 140 is added into the reaction vessel at the sample station 122 by means of the disposable suction nozzle, that is, the reaction vessel completes sample loading at the sample station 122, and the disposable suction nozzle may be discarded after the sample loading is completed, so as to take a new disposable suction nozzle from the accommodation mechanism 130 to perform sample loading on the next reaction vessel, thereby preventing cross contamination of the samples. Finally, the conveying tray 124 rotates by 180° to return the reaction vessel from the sample station 122 to the in-out station 121, such that the transfer gripper transfers, at the in-out station 121, the reaction vessel, of which the sample loading has been completed, from the conveying tray 124 to the carrying mechanism 200.

If the input, sample loading and output procedures of the reaction vessel are completed at the same station, the next reaction vessel must wait until the previous reaction vessel leaves the conveying tray 124 and then enter the conveying tray 124, such that there is a relatively long "queue waiting" time between two adjacent reaction vessels, resulting in a prolonged interval time for starting the sample loading of the two adjacent reaction vessels, such that the time for inputting or outputting the two adjacent reaction vessels to or from the conveying tray 124 is prolonged, thereby affecting the test flux of the sample analyzer 10. In fact, the "queue waiting" time is approximately equal to the sum of an input time, an output time and a sample loading time of the reaction vessel. In the above embodiment, by means of providing the in-out station 121 and the sample station 122, when the previous reaction vessel is subjected to sample loading at the sample station 122, the next reaction vessel can enter the conveying tray 124 from the in-out station 121, such that the input and sample loading of different reaction vessels can be performed at the same time. Accordingly, the "queue waiting" time between the two adjacent reaction vessels can be shortened, such that the "queue waiting" time is not greater than the sum of the output time and the sample loading time of the reaction vessel, and then the interval time of the two adjacent reaction vessels for arriving at the sample station 122 is compressed, thereby shortening the time for inputting or outputting the two adjacent reaction vessels to or from the conveying tray 124, and finally, the test flux of the sample analyzer 10 is improved.

In some embodiments, the carrying mechanism 200 includes a driving wheel, a driven wheel and a conveyor belt 210, the conveyor belt 210 is sleeved on the driving wheel and the driven wheel, the reaction vessel may be carried on the conveyor belt 210, and the conveyor belt 210 may drive the reaction vessel to move clockwise along a runway-shaped track. The space occupied by the conveyor belt 210 is relatively small, which is beneficial to the compact design of the structure of the carrying mechanism 200. The conveyor belt 210 includes a linear first edge 211 and a linear second edge 212, the first edge 211 and the second edge 212 may be parallel to each other, and the first edge 211 is further away from the uniform mixing mechanism 300 relative to the second edge 212, so as to form an elliptical carrying range, which occupies a small space. The carrying mechanism 200 has a first station 221, a second station 222 and a reagent station 223, wherein the first station 221 corresponds to the first edge 211 and is arranged close to the in-out station 121, and the transfer gripper may remove the reaction vessel on the conveying tray 124 from the in-out station 121 and input the reaction vessel from the first station 221 to the first edge 211. The second station 222 and the reagent station 223 correspond to the second edge 212, such that the second edge 212 drives the reaction vessel to perform linear movement between the reagent station 223 and the second station 222. The reagent bin 150 is used for storing a reagent and is arranged close to the reagent station 223, and the second station 222 is arranged close to the uniform mixing mechanism 300. A connecting line between the first station 221 and the second station 222 may perpendicularly intersect with a connecting line between the reagent station 223 and the second station 222, in other words, the first station 221 and the second station 222 are arranged at intervals in a left-right direction, and the reagent station 223 and the second station 222 are arranged at intervals in a front-back direction.

During work, firstly, the conveyor belt 210 conveys the reaction vessel from the first station 221 to the reagent station 223; and then, the reagent in the reagent bin 150 may be added into the reaction vessel at the reagent station 223 through a reagent needle. Since the sample has been added into the reaction vessel at the first station 221, at this time, the sample and the reagent are simultaneously contained in the reaction vessel. Finally, the conveyor belt 210 conveys the reaction vessel, which contains the sample and the reagent, from the reagent station 223 to the second station 222, such that the first gripper outputs, at the second station 222, the reaction vessel from the conveyor belt 210, so as to input the reaction vessel to the uniform mixing mechanism 300.

In some embodiments, the uniform mixing mechanism 300 includes a carrying member 310, a uniform mixing assembly and a belt driving assembly, the belt driving assembly may be used for driving the carrying member 310 to rotate counterclockwise or clockwise, the structure of the carrying member 310 may be similar to that of the conveying tray 124, that is, the carrying member 310 is also a disk-shaped structure, and the carrying member 310 may carry the reaction vessel, so as to drive the reaction vessel to rotate. The uniform mixing mechanism 300 has a transport station 321, a uniform mixing station 322, a first transfer station 331 and a second transfer station 332. The transport station 321 and the uniform mixing station 322 are spaced apart from each other by 180° in the rotation direction of the carrying member 310, the first transfer station 331 and the second transfer station 332 are spaced apart from each other by 180° in the rotation direction of the carrying member 310, such that a connecting line between the first transfer station 331 and the second transfer station 332 perpendicularly intersects with a connecting line between the transport station 321 and the uniform mixing station 322, and a point of intersection of the two connecting lines is located at the rotation center of the carrying member 310. The uniform mixing assembly corresponds to the uniform mixing station 322, and when the reaction vessel moves to the uniform mixing station 322, the uniform mixing assembly may drive the reaction vessel to generate eccentric oscillation, such that the sample and the reagent in the reaction vessel are fully and uniformly mixed. In other embodiments, the reaction vessel may perform linear movement between the transport station 321 and the uniform mixing station 322, and may also perform linear movement between the first transfer station 331 and the second transfer station 332 at the same time.

During work, firstly, the first gripper may remove the reaction vessel on the conveyor belt 210 from the second station 222, and input, at the transport station 321, the reaction vessel to the carrying member 310; then the carrying member 310 rotates by 180° to convey the reaction vessel from the transport station 321 to the uniform mixing station 322, such that the uniform mixing assembly generates eccentric oscillation on the reaction vessel, so as to uniformly mix the sample and the reagent, and the uniform mixing effect is thus improved; and finally, the carrying member 310 rotates by 180° to return the reaction vessel from the uniform mixing station 322 to the transport station 321, such that the first gripper removes, at the transport station 321, the reaction vessel from the carrying member 310, so as to input the reaction vessel to the incubation mechanism 400.

Similar to the working principle of the conveying tray 124, if the input, uniform mixing and output procedures of the reaction vessel are completed at the same station, the next reaction vessel must wait until the previous reaction vessel leaves the carrying member 310 and then enter the carrying member 310, such that there is a relatively long "queue waiting" time between two adjacent reaction vessels, and the queue waiting time is equal to the sum of the input time, the output time and the uniform mixing time of the reaction vessel, resulting in a prolonged interval time for starting the uniform mixing procedure of the two adjacent reaction vessels, such that the time for inputting or outputting the two adjacent reaction vessels to or from the carrying member 310 is prolonged, thereby affecting the test flux of the sample analyzer 10. In the above embodiment, by means of providing the transport station 321 and the uniform mixing station 322, for example, when the previous reaction vessel is oscillated at the uniform mixing station 322 for uniform mixing, the next reaction vessel may enter the carrying member 310 from the transport station 321; and as another example, when the previous reaction vessel is output from the carrying member 310 at the transport station 321, the next reaction vessel may be oscillated at the uniform mixing station 322 for uniform mixing. Accordingly, the input and uniform mixing procedures of different reaction vessels on the carrying member 310 can be performed at the same time, and the output and uniform mixing procedures of different reaction vessels on the carrying member 310 can also be performed at the same time. In this way, the "queue waiting" time between the two adjacent reaction vessels can be shortened, such that the "queue waiting" time is approximately equal to the uniform mixing time of the reaction vessel, and then the interval time of the two adjacent reaction vessels for arriving at the uniform mixing station 322 is compressed, thereby shortening the time for inputting or outputting the two adjacent reaction vessels to or from the carrying member 310, and finally, the test flux of the sample analyzer 10 is improved, and the uniform mixing effect can also be improved. At the same time, the input and output time of the reaction vessel on the transport station 321 is less than the time required for uniform mixing, such that the efficiency can be improved to the maximum extent, and only the same driving unit is required to drive the carrying member 310 to move among the transport station 321, the uniform mixing station 322, the first transfer station 331 and the second transfer station 332, such that the structure of the uniform mixing mechanism 300 can be simplified, the occupied space is small, and the four stations can act at the same time, such that the speed is high.

In some embodiments, the incubation mechanism 400 and the uniform mixing mechanism 300 are arranged oppositely and independently, and the incubation mechanism 400 is used for heating the sample and reagent in the reaction vessel, so as to realize incubation. The incubation mechanism 400 is fixedly arranged, that is, the incubation mechanism 400 is stationary, such that a heat dissipation effect on the incubation mechanism 400 by flowing air caused by movement is eliminated, and the incubation effect is thus improved. According to the movement ranges of the first gripper and the second gripper, the incubation mechanism 400 may be divided into a first region 410 and a second region 420, the movement range of the first gripper is a dashed rectangle A, and the movement range of the first gripper may cover the entire incubation mechanism 400, such that the movement range of the first gripper may simultaneously cover the first region 410 and the second region 420. The movement range of the second gripper is a dashed rectangle B, the movement range of the second gripper may only cover the second region 420, but cannot cover the first region 410, that is, the second region 420 is located within the movement range of the second gripper, and the first region 410 is located beyond the movement range of the second gripper. At the same time, the transport station 321, the second transfer station 332 and the second station 222 are located within the movement range of the first gripper, and are located beyond the movement range of the second gripper; and the first transfer station 331 is located within the movement range of the second gripper, and of course, the first transfer station 331 may also be located within the movement range of the first gripper, such that interference generated between the first gripper and the second gripper can be effectively avoided, and it is ensured that the both grippers work simultaneously at different positions.

The width h of the first region 410 is less than the width H of the second region 420, such that the first region 410 and the second region 420 together enclose a mounting notch 430, and the carrying member 310 is at least partially accommodated in the mounting notch 430. Therefore, the carrying member 310 can fully utilize the space of the mounting notch 430, and it is ensured that the area occupied by both the incubation mechanism 400 and the carrying member 310 in the horizontal plane is relatively small, such that the sample analyzer 10 is more compact in structure, and the space utilization rate is thus improved. The second region 420 is closer to the first transfer station 331 relative to the first region 410, and the distance from the center of the first transfer station 331, in an arrangement direction perpendicular to the first region 410 and the second region 420, to the centers of a row of reaction cups at the bottommost end of the incubation mechanism 400 is greater than or equal to zero, the connecting line between the first transfer station 331 and the second transfer station 332 intersects with the connecting line between the transport station 321 and the uniform mixing station 322, preferably, the connecting line between the first transfer station 331 and the second transfer station 332 perpendicularly intersects with the connecting line between the transport station 321 and the uniform mixing station 322, therefore the movement ranges of the first gripper and the second gripper can be reduced as much as possible, and the interference problem of the two grippers themselves are solved, such that the movement speed and working efficiency of the two grippers are improved. Compared with the second region 420, the first region 410 is closer to the transport station 321 and the second station 222.

A straight line for connecting the centers of the transport station 321 and the uniform mixing station 322 is denoted as a first straight line, and a straight line for connecting the centers of the first transfer station 331 and the second transfer station 332 is denoted as a second straight line. The extension direction of the first straight line may be understood as the width direction of the incubation mechanism 400, and the extension direction of the second straight line may be understood as the length direction of the incubation mechanism 400. The incubation mechanism 400 has first edges, which are arranged at intervals in the extension direction of the first straight line, and second edges, which are arranged at intervals in the extension direction of the second straight line. Obviously, the first edges generally extend in the length direction of the incubation mechanism 400, and the second edges generally extend in the width direction of the incubation mechanism 400. Since the carrying member 310 is at least partially accommodated in the mounting notch 430, the first straight line passes through the incubation mechanism 400 and neither overlaps nor intersects with the second edges, such that the first straight line is spaced apart from the second edges. The second straight line also passes through the incubation mechanism 400 and neither overlaps nor intersects with the first edges, such that the second straight line is spaced apart from the first edges.

An operation surface, which is used for enabling the uniform mixing mechanism 300 and the incubation mechanism 400 to complete different procedures, is taken as a reference, the operation surface may be determined by a third straight line and a fourth straight line, which are perpendicular to each other, the third straight line extends in the arrangement direction of the first region and the second region. In fact, the extension directions of the third straight line and the second straight line are the same, and the extension directions of the fourth straight line and the first straight line are the same. In the extension direction of the fourth straight line, the uniform mixing station 322 keeps a set distance with the first region 410 and the second region 420, such that the movement ranges of the first gripper and the second gripper can be further reduced, and the working efficiency of the first gripper and the second gripper is thus improved.

During work, the first gripper may remove the reaction vessel on the carrying member 310 from the transport station 321 and input the reaction vessel to the first region 410 or the second region 420 of the incubation mechanism 400, may also remove the reaction vessel in the first region 410 or the second region 420 of the incubation mechanism 400, and input, at the second station 222, the reaction vessel onto the conveyor belt 210, and may also remove the reaction vessel on the carrying member 310 from the second transfer station 332, and input, at the second station 222, the reaction vessel onto the conveyor belt 210. In this way, the first gripper can realize the transfer of the reaction vessel on the three mechanisms, that is, the incubation mechanism 400, the uniform mixing mechanism 300 and the carrying mechanism 200, and no interference is generated, therefore the efficiency is high.

In some embodiments, the cleaning mechanism 160 and the measurement mechanism 170 are oppositely and independently arranged and are located beside the incubation mechanism 400, the second gripper may transfer the reaction vessel in the incubation mechanism 400 to the cleaning mechanism 160, and may also transfer the reaction vessel in the cleaning mechanism 160 to the measurement mechanism 170. For the reaction vessel located on the cleaning mechanism 160, a substance to be measured in the reaction vessel is adsorbed on a magnetic bead, and then the cleaning mechanism 160 cleans the substance to be measured, so as to remove interference impurities, such that the substance to be measured is cleaned. After the cleaning is completed, the second gripper removes the reaction vessel from the cleaning mechanism 160 and inputs the reaction vessel to a measurement device, and then a signal reagent is added into the reaction vessel, such that the signal reagent reacts with the substance to be measured on the magnetic bead, and accordingly, the measurement device measures a light-emitting amount generated by the reaction between the signal reagent and the substance to be measured. Moreover, the second gripper may also input, at the first transfer station, the reaction vessel on the cleaning mechanism to the carrying member. In this way, the second gripper can complete the transfer of the reaction vessel on the four mechanisms, that is, the cleaning mechanism 160, the measurement mechanism 170, the incubation mechanism 400 and the uniform mixing mechanism 300, interference is avoided, and the efficiency is high.

The sample analyzer 10 may perform three detection items on a sample, and the process flows of the three detection items respectively correspond to a one-step method, a one-step re-addition method and a two-step method. In an early test stage, the one-step method, the one-step re-addition method and the two-step method all have the same working steps; and in a later test stage, the working steps of the three methods are different. The same working steps of the one-step method, the one-step re-addition method and the two-step method in the early test stage are denoted as universal steps, and the universal steps are described as follows:
First, the transfer gripper removes the reaction vessel from the storage mechanism 110, and inputs, at the in-out station 121, the reaction vessel to the conveying tray 124; then, the conveying tray 124 rotates to enable the reaction vessel to move from the in-out station 121 to the sample station 122, such that the disposable suction nozzle adds the sample in the sample bin 140 into the reaction vessel; and after sample loading is completed, the conveying tray 124 rotates to enable the reaction vessel to move from the sample station 122, so as to return to the in-out station 121, and finally the transfer gripper removes, at the in-out station 121, the reaction vessel from the conveying tray 124, and inputs, at the first station 221, the reaction vessel to the conveyor belt 210.

Secondly, the conveyor belt 210 conveys the reaction vessel, into which the sample is added, from the first station 221 to the reagent station 223, and the reagent needle adds the reagent in the reagent bin 150 into the reaction vessel, such that the sample and the reagent are mixed; then the conveyor belt 210 conveys the reaction vessel from the reagent station 223 to the second station 222; and finally, the first gripper removes, at the second station 222, the reaction vessel from the conveyor belt 210, and inputs, at the transport station 321, the reaction vessel to the carrying member 310.

At the end of the working steps in the early test stage of the one-step method, the reaction vessel, into which the reagent and the sample has been added, has been input at the transport station 321 to the carrying member 310. The working steps in the later test stage of the one-step method are described as follows:
Step 1, the carrying member 310 is rotated by 180° to enable the reaction vessel to move from the transport station 321 to the uniform mixing station 322, such that the uniform mixing assembly drives the reaction vessel to generate eccentric oscillation, so as to fully and uniformly mix the sample and the reagent; then the carrying member 310 is rotated by 180° to enable the reaction vessel to move from the uniform mixing station 322 to the transport station 321; and finally, the first gripper removes, at the transport station 321, the reaction vessel from the carrying member 310, and inputs the reaction vessel to the second region 420 of the incubation mechanism 400.

Step 2, the second gripper transfers the reaction vessel, of which incubation has been completed, from the second region 420 of the incubation mechanism 400 to the cleaning mechanism 160; after the reaction vessel is cleaned, the second gripper inputs the reaction vessel from the cleaning mechanism 160 to the measurement mechanism 170; and after the measurement of the reaction vessel is completed, the second gripper takes away the reaction vessel from the measurement mechanism 170, and discards the reaction vessel.

At the end of the working steps in the early test stage of the one-step re-addition method, the reaction vessel, into which the reagent and the sample have been added, has been input at the transport station 321 to the carrying member 310, and the reagent, which has been added in the early test stage of the reaction vessel, is denoted as a first reagent. The working steps in the later test stage of the one-step re-addition method are described as follows:
Step 1, the carrying member 310 is rotated by 180° to enable the reaction vessel to move from the transport station 321 to the uniform mixing station 322, such that the uniform mixing assembly drives the reaction vessel to generate eccentric oscillation, so as to fully and uniformly mix the sample and the reagent; then the carrying member 310 is rotated by 180° to enable the reaction vessel to move from the uniform mixing station 322 to the transport station 321; and finally, the first gripper removes, at the transport station 321, the reaction vessel from the carrying member 310, and inputs the reaction vessel to the first region 410 of the incubation mechanism 400; and of course, when the first region 410 has been saturated and cannot continue to receive the reaction vessel, the first gripper may also remove, at the transport station 321, the reaction vessel from the carrying member 310, and input the reaction vessel to the second region 420 of the incubation mechanism 400.

Step 2, after the reaction vessel is incubated in the incubation mechanism 400 for a set time, the first gripper removes the reaction vessel from the first region 410 of the incubation mechanism 400, and inputs, at the second station 222, the reaction vessel onto the conveyor belt 210; then the conveyor belt 210 conveys the reaction vessel from the second station 222 to the reagent station 223, the reagent needle then adds a reagent into the reaction vessel, the reagent is denoted as a second reagent, the ingredients of the second reagent may be different from those of the first reagent, and at this time, there are the sample, the first reagent and the second reagent in the reaction vessel at the same time; next, the conveyor belt 210 conveys the reaction vessel, which contains the sample, the first reagent and the second reagent, to the second station 222; and finally, the first gripper removes, at the second station 222, the reaction vessel from the conveyor belt 210, and inputs, at the transport station 321, the reaction vessel to the carrying member 310.

Step 3, the carrying member 310 is rotated by 180° to enable the reaction vessel to move from the transport station 321 to the uniform mixing station 322, such that the uniform mixing assembly drives the reaction vessel to generate eccentric oscillation, so as to fully and uniformly mix the sample, the first reagent and the second reagent; then, the carrying member 310 is rotated by 180° to enable the reaction vessel to move from the uniform mixing station 322 to the transport station 321; and finally, the first gripper removes, at the transport station 321, the reaction vessel from the carrying member 310, and inputs the reaction vessel to the second region 420 of the incubation mechanism 400.

Step 4, the second gripper transfers the reaction vessel, of which incubation has been completed, from the second region 420 of the incubation mechanism 400 to the cleaning mechanism 160; after the reaction vessel is cleaned, the second gripper inputs the reaction vessel from the cleaning mechanism 160 to the measurement mechanism 170; and after the measurement of the reaction vessel is completed, the second gripper takes away the reaction vessel from the measurement mechanism 170, and discards the reaction vessel.

At the end of the working steps in the early test stage of the two-step method, the reaction vessel, into which the reagent and the sample have been added, has been input at the transport station 321 to the carrying member 310, and the reagent, which has been added in the early test stage of the reaction vessel, is denoted as a first reagent. The working steps in the later test stage of the two-step method are described as follows:
Step 1, the carrying member 310 is rotated by 180° to enable the reaction vessel to move from the transport station 321 to the uniform mixing station 322, such that the uniform mixing assembly drives the reaction vessel to generate eccentric oscillation, so as to fully and uniformly mix the sample and the reagent; then the carrying member 310 is rotated by 180° to enable the reaction vessel to move from the uniform mixing station 322 to the transport station 321; and finally, the first gripper removes, at the transport station 321, the reaction vessel from the carrying member 310, and inputs the reaction vessel to the second region 420 of the incubation mechanism 400.

Step 2, the second gripper transfers the reaction vessel, of which incubation has been completed, from the second region 420 of the incubation mechanism 400 to the cleaning mechanism 160; after the reaction vessel is cleaned, the second gripper removes the reaction vessel from the cleaning mechanism 160, and inputs, at the first transfer station 331, the reaction vessel to the carrying member 310; then the carrying member 310 conveys the reaction vessel from the first transfer station 331 to the second transfer station 332; and finally, the first gripper removes, at the second transfer station 332, the reaction vessel from the carrying member 310, and inputs, at the second station 222, the reaction vessel to the conveyor belt 210.

Step 3, the conveyor belt 210 conveys the reaction vessel from the second station 222 to the reagent station 223, the reagent needle then adds a reagent into the reaction vessel, the reagent is denoted as a second reagent, the ingredients of the second reagent may be different from those of the first reagent, and at this time, there are the sample, the first reagent and the second reagent in the reaction vessel at the same time; then the conveyor belt 210 conveys the reaction vessel, which contains the sample, the first reagent and the second reagent, to the second station 222; and finally, the first gripper removes, at the second station 222, the reaction vessel from the conveyor belt 210, and inputs, at the transport station 321, the reaction vessel to the carrying member 310.

Step 4, the carrying member 310 is rotated by 180° to enable the reaction vessel to move from the transport station 321 to the uniform mixing station 322, such that the uniform mixing assembly drives the reaction vessel to generate eccentric oscillation, so as to fully and uniformly mix the sample, the first reagent and the second reagent; then, the carrying member 310 is rotated by 180° to enable the reaction vessel to move from the uniform mixing station 322 to the transport station 321; and finally, the first gripper removes, at the transport station 321, the reaction vessel from the carrying member 310, and inputs the reaction vessel to the second region 420 of the incubation mechanism 400.

Step 5, the second gripper transfers the reaction vessel, of which incubation has been completed, from the second region 420 of the incubation mechanism 400 to the cleaning mechanism 160; after the reaction vessel is cleaned, the second gripper inputs the reaction vessel from the cleaning mechanism 160 to the measurement mechanism 170; and after the measurement of the reaction vessel is completed, the second gripper takes away the reaction vessel from the measurement mechanism 170, and discards the reaction vessel.

Therefore, for the sample analyzer 10, different reaction vessels for respectively performing the one-step method, the one-step re-addition method and the two-step method may exist at the same time, in other words, while the detection items of the one-step method are performed in a part of reaction vessels, the detection items of the one-step re-addition method and the two-step method are performed in the other parts of reaction vessels, that is, it is ensured that different reaction vessels for respectively performing the one-step method, the one-step re-addition method and the two-step method can be orderly and quickly tested in the same sample analyzer 10.

If the uniform mixing mechanism 300 and the incubation mechanism 400 are of an integrated turntable structure, on one hand, when reaction vessels are input or output on the turntable through two grippers at the same time, the two grippers will work in a limited space of the turntable, resulting in interference, that is, the two grippers cannot move at the same time. At this time, in order to eliminate the interference, the two grippers must move successively, that is, after waiting for one gripper to leave the interference region, the other gripper starts to move, resulting in a "queue waiting" time of the grippers, thereby reducing the working efficiency of the grippers, which in return reduces the number of reaction vessels, which are input to and output from the turntable within the unit time, and finally, the test flux is reduced. On the other hand, the turntable is heavy in weight and large in volume, the turntable with a large weight is large in inertia, which will obviously increases the difficulty of movement control of the turntable , such that the speed of the turntable is difficult to be controlled. When the speed of the turntable is relatively low, the number of reaction vessels, which are input to and output from the turntable within the unit time, is also reduced, thus affecting the test flux. In yet another aspect, the uniform mixing mechanism in the turntable will be connected to other mechanisms, such as an external control mechanism, by means of a connecting line, and the connecting line plays a role in conducting heat in the turntable, resulting in heat loss for the turntable, thereby reducing the incubation effect of the turntable.

For the sample analyzer 10 in the above embodiments, the incubation mechanism 400 and the uniform mixing mechanism 300 are independent of each other, so as to eliminate a direct physical connection relationship therebetween, and the incubation mechanism 400 is fixedly arranged. In this way, the structure is simple, and the incubation effect is good. In addition, on one hand, when the first gripper and the second gripper input or output the reaction vessels on the carrying member 310, interference can be eliminated, thereby avoiding that the first gripper and the second gripper can only take the form of sequential movement due to the interference, thus eliminating the "queue waiting" time, ensuring that the first gripper and the second gripper can move at the same time, and improving the working efficiency of the grippers, such that the number of reaction vessels, which are input to and output from the carrying member 310 within the unit time, is increased, and finally the test flux is improved. On the other hand, the weight and the volume of the carrying member 310 are reduced, thereby reducing the difficulty of movement control of the carrying member 310, and accordingly, the rotation speed of the carrying member 310 can be reasonably improved. When the rotation speed is improved, the number of reaction vessels, which are input to and output from the carrying member 310 within the unit time, can be increased, thereby further improving the test flux. In yet another aspect, since there is no physical connection relationship between the incubation mechanism 400 and the uniform mixing mechanism 300, the heat of the incubation mechanism 400 can be effectively prevented from being input to the uniform mixing mechanism 300 in a heat conduction manner, thereby preventing the incubation mechanism 400 from generating heat loss, thus improving the incubation effect of the incubation mechanism 400.

For example, for the reaction vessel, which is used for performing the two-step method, the second gripper moves from the cleaning mechanism 160 to the first transfer station 331, such that the second gripper may input, at the first transfer station 331, the reaction vessel on the cleaning mechanism 160 to the carrying member 310. For the reaction vessel, which is used for performing the one-step re-addition method, the first gripper may move from the transport station 321 to the first region 410, such that the first gripper may transfer, at the transport station 321, the reaction vessel on the carrying member 310 to the first region 410 of the incubation mechanism 400; and the first gripper may also move from the first region 410 to the second station 222, such that the first gripper may input, at the second station 222, the reaction vessel in the first region 410 of the incubation mechanism 400 to the conveyor belt 210.

Since not only the first region 410 is located beyond the movement range of the second gripper, but the transport station 321, the second transfer station 332 and the second station 222 are also all located beyond the movement range of the second gripper, when the second gripper moves from the cleaning mechanism 160 to the first transfer station 331, the first gripper may move from the transport station 321 to the first region 410, or the first gripper may also move from the first region 410 to the second station 222. Therefore, the first gripper and the second gripper are effectively prevented from generating interference during movement, the "queue waiting" time caused by the first gripper and the second gripper for avoiding the interference is eliminated, the working efficiency of the first gripper and the second gripper is improved, it is ensured that the working steps of the two-step method and the one-step re-addition method can be performed at the same time, and the number of reaction vessels, which are input to and output from the cleaning mechanism 160, the carrying member 310 and the incubation mechanism 400 within the unit time, is increased, thereby improving the test flux of the sample analyzer 10.

As another example, for the reaction vessel, which is used for performing the two-step method, the second gripper moves from the cleaning mechanism 160 to the first transfer station 331, such that the second gripper may input, at the first transfer station 331, the reaction vessel on the cleaning mechanism 160 to the carrying member 310. For the reaction vessel, which is used for performing the one-step method, the first gripper moves from the transport station 321 to the second region 420 of the incubation mechanism 400, such that the first gripper may transfer, at the transport station 321, the reaction vessel on the carrying member 310 to the second region 420 of the incubation mechanism 400. Since the transport station 321 is located beyond the movement range of the second gripper, while the second gripper moving from the cleaning mechanism 160 to the first transfer station 331, the first gripper may move from the transport station 321 to the second region 420, thereby effectively avoiding the interference to eliminate the "queue waiting" time, and also improving the test flux.

As another example, for the reaction vessel, which is used for performing the two-step method, the first gripper moves from the second transfer station 332 to the second station 222, such that the first gripper may remove the reaction vessel on the carrying member 310 from the second transfer station 332, and convey, at the second station 222, the reaction vessel to the conveyor belt 210. The second gripper moves from the cleaning mechanism 160 to the first transfer station 331, such that the second gripper may remove the reaction vessel on the cleaning mechanism 160 , and input, at the first transfer station 331, the reaction vessel to the carrying member 310. Since the second transfer station 332 and the second station 222 are located within the movement range of the second gripper, and the first transfer station 331 and the second transfer station 332 are two different stations, which are spaced apart from each other by 180° in the rotation direction of the carrying member 310, while the first gripper moving from the second transfer station 332 to the second station 222, the second gripper may move from the cleaning mechanism 160 to the first transfer station 331 without generating mutual interference, thereby increasing the number of reaction vessels, which are input to and output from the carrying member 310 within the unit time to perform the two-step method, thus improving the test flux of the sample analyzer 10.

As another example, while the transfer gripper removes the reaction vessel on the conveying tray 124 from the in-out station 121, and inputs, at the first station 221, the reaction vessel to the conveyor belt 210, the first gripper may remove the reaction vessel on the conveyor belt 210 from the second station 222, and input, at the transport station 321, the reaction vessel to the carrying member 310, such that the number of reaction vessels, which are input to and output from the conveyor belt 210 within the unit time, can also be increased, thereby improving the test flux.

Due to the presence of the mounting notch 430 on the incubation mechanism 400, on one hand, the occupied area of the incubation mechanism 400 can be reasonably reduced, such that the coverage area of the movement ranges of the first gripper and the second gripper is reasonably reduced, that is, the movement strokes of the first gripper and the second gripper are reduced. On the other hand, the carrying member 310 is at least partially accommodated in the mounting notch 430, such that the distance from each part of the first region 410 and the second region 420 to the carrying member 310 is also shortened, for example, the distance from the transport station 321 to each part in the first region 410 is greatly reduced, such that the movement stroke of the first gripper for moving from the incubation mechanism 400 to the carrying member 310 can be shortened. When the movement strokes of the first gripper and the second gripper are reasonably reduced, on one hand, the time consumed by the first gripper and the second gripper in the movement process may be reduced, thereby improving the working efficiency of the first gripper and the second gripper, and increasing the number of reaction vessels, which are input to and output from the carrying member 310 and the incubation mechanism 400 within the unit time, such that the test flux of the sample analyzer 10 is improved. On the other hand, the operation stability and reliability of the first gripper and the second gripper are improved, thereby avoiding the situation that the movement precision of the two grippers is reduced or even the two grippers are damaged due to vibration during a long-distance movement process.

Therefore, for the sample analyzer 10 in the above embodiment, in the presence of the detection items corresponding to only one of the one-step method, the one-step re-addition method and the two-step method, the "queue waiting" time can be eliminated to improve the test flux. In the presence of the detection items corresponding to at least two of the one-step method, the one-step re-addition method and the two-step method, a plurality of detection items can move simultaneously at key nodes, and the "queue waiting" time can also be eliminated to improve the test flux.

The technical features of the above embodiments may be combined arbitrarily. To make the description concise, not all possible combinations of the technical features of the above embodiments have been described. However, as long as there is no contradiction in the combination of these technical features, it should be considered as the scope of the present specification.

The above embodiments only express several embodiments of the present invention, and the description thereof is more specific and detailed, but cannot be understood as a limitation to the patent scope of the present invention. It should be noted that, for ordinary skilled in the art, several variations and improvements may be made without departing from the concept of the present invention, and are all within the protection scope of the present invention. Therefore, the protection scope of the present invention shall be subject to the appended claims.

## Claims

1. A sample analyzer, comprising:
an incubation mechanism (400), which is used for performing incubation on liquid in a reaction vessel; and
a uniform mixing mechanism (300), which is independently arranged relative to the incubation mechanism (400) and has a transport station (321) and a uniform mixing station (322), wherein the uniform mixing mechanism (300) comprises a carrying member (310) for carrying the reaction vessel, and the carrying member (310) drives the reaction vessel to circularly move between the transport station (321) and the uniform mixing station (322); and the carrying member (310) conveys the reaction vessel, which is input from the transport station (321), to the uniform mixing station (322), so as to uniformly mix the liquid, and conveys the reaction vessel from the uniform mixing station (322) to the transport station (321), so as to output the reaction vessel to the incubation mechanism (400);
and wherein the incubation mechanism (400) is fixedly arranged, the incubation mechanism (400) is divided into a first region (410) and a second region (420), a width of the first region (410) is less than a width of the second region (420), such that the first region (410) and the second region (420) together enclose a mounting notch (430), and **characterized in that** the carrying member (310) is at least partially accommodated in the mounting notch (430).

2. The sample analyzer as claimed in claim 1, wherein the carrying member (310) is rotatably arranged, so as to drive the reaction vessel to perform circular movement; the carrying member (310) is rotated by 180° , such that the reaction vessel arrives at the uniform mixing station (322) from the transport station (321).

3. The sample analyzer as claimed in claim 2, wherein the uniform mixing mechanism (300) further has a first transfer station (331) and a second transfer station (332), positions of the first transfer station (331) and the second transfer station (332) are different from positions of the transport station and the uniform mixing station, the reaction vessel is input at the first transfer station (331) to the carrying member (310), and the carrying member (310) is rotated by 180° , such that the reaction vessel arrives at the second transfer station (332) from the first transfer station (331), so as to be output.

4. The sample analyzer as claimed in claim 3, wherein a connecting line between the first transfer station (331) and the second transfer station (332) intersects with a connecting line between the transport station and the uniform mixing station, and both the transport station and the uniform mixing station are spaced apart from each other by 180° in a rotation direction of the carrying member (310).

5. The sample analyzer as claimed in claim 3, further comprising a first gripper and a second gripper, wherein both the incubation mechanism (400) and the transport station (321) are located within a movement range of the first gripper, wherein the first region (410) is located beyond a movement range of the second gripper, the first transfer station (331) is located within the movement range of the second gripper, and the transport station is located beyond the movement range of the second gripper.

6. The sample analyzer as claimed in claim 5, wherein the second transfer station (332) is located within the movement range of the first gripper, and is located beyond the movement range of the second gripper.

7. The sample analyzer as claimed in claim 5, wherein a straight line for connecting centers of the transport station (321) and the uniform mixing station (322) is a first straight line, a straight line for connecting centers of the first transfer station (331) and the second transfer station (332) is a second straight line, both the first straight line and the second straight line pass through the incubation mechanism (400), the incubation mechanism (400) has a first edge and a second edge at the mounting notch (430), the first straight line neither overlaps nor intersects with the second edge, such that the first straight line is spaced apart from the second edge, the second straight line neither overlaps nor intersects with the first edge, such that the second straight line is spaced apart from the first edge.

8. The sample analyzer as claimed in claim 5, wherein the second region (420) of the incubation mechanism (400) is located within the movement range of the second gripper, the first region is closer to the transport station relative to the second region, and the second region is closer to the first transfer station (331) relative to the first region.

9. The sample analyzer as claimed in claim 5, further comprising a cleaning mechanism and a measurement mechanism, which are oppositely and independently arranged and are located beyond the movement range of the first gripper, wherein the second gripper inputs the reaction vessel from the incubation mechanism to the cleaning mechanism, and inputs the reaction vessel from the cleaning mechanism to the measurement mechanism, and the second gripper further inputs, at the first transfer station (331), the reaction vessel on the cleaning mechanism to the carrying member (310).

10. The sample analyzer as claimed in claim 5, further comprising a carrying mechanism, which has a first station (221), a second station (222) and a reagent station (223), wherein the second station (222) is located within the movement range of the first gripper, beyond the movement range of the second gripper and above the uniform mixing station, the carrying mechanism conveys the reaction vessel, which is input from the first station (221), to the reagent station (223), so as to load a reagent, and conveys the reaction vessel from the reagent station (223) to the second station (222), so as to output the reaction vessel to the carrying member (310), and the reaction vessel on the incubation mechanism is input at the second station (222) to the carrying mechanism.

11. The sample analyzer as claimed in claim 10, wherein the reaction vessel on the uniform mixing mechanism (300) is input at the second station (222) to the carrying mechanism.

12. The sample analyzer as claimed in claim 10, wherein the carrying mechanism comprises a driving wheel, a driven wheel and a conveyor belt, the conveyor belt is sleeved on the driving wheel and the driven wheel, the conveyor belt comprises a linear first edge and a linear second edge, the first edge is further away from the carrying member (310) relative to the second edge, the reaction vessel is input from the first station (221) to the first edge, and the second edge drives the reaction vessel to move between the second station (222) and the reagent station (223).

13. The sample analyzer as claimed in claim 10, further comprising a conveying mechanism, which has an in-out station and a sample station, wherein the conveying mechanism conveys the reaction vessel, which is input from the in-out station, to the sample station, so as to load a sample, and returns the reaction vessel from the sample station to the in-out station, so as to output the reaction vessel to the carrying mechanism.

14. The sample analyzer as claimed in claim 5, wherein the uniform mixing mechanism (300) and the incubation mechanism (400) are located on one side of the carrying mechanism, and the conveying mechanism is located on the other side of the carrying mechanism.

## Patentansprüche

1. Probenanalysator, umfassend:
einen Inkubationsmechanismus (400), der zur Durchführung der Inkubation von Flüssigkeit in einem Reaktionsgefäß verwendet wird; und
einen gleichmäßigen Mischmechanismus (300), der unabhängig vom Inkubationsmechanismus (400) angeordnet ist und eine Transportstation (321) und eine gleichmäßige Mischstation (322) aufweist, wobei der gleichmäßige Mischmechanismus (300) ein Trageelement (310) zum Tragen des Reaktionsgefäßes umfasst und das Trageelement (310) das Reaktionsgefäß antreibt, um sich zwischen der Transportstation (321) und der gleichmäßigen Mischstation (322) kreisförmig zu bewegen; und das Trageelement (310) das Reaktionsgefäß, das von der Transportstation (321) eingegeben wird, zur gleichmäßigen Mischstation (322) befördert, um die Flüssigkeit gleichmäßig zu mischen, und das Reaktionsgefäß von der gleichmäßigen Mischstation (322) zur Transportstation (321) befördert, um das Reaktionsgefäß zum Inkubationsmechanismus (400) auszugeben;
und wobei der Inkubationsmechanismus (400) fest angeordnet ist, ist der Inkubationsmechanismus (400) in einen ersten Bereich (410) und einen zweiten Bereich (420) unterteilt, die Breite der ersten Region (410) geringer ist als die Breite der zweiten Region (420), sodass die erste Region (410) und die zweite Region (420) zusammen eine Befestigungsaussparung (430) umschließen, und **dadurch gekennzeichnet, dass**
das Tragelement (310), das mindestens teilweise in der Befestigungsaussparung (430) untergebracht ist.

2. Probenanalysator nach Anspruch 1, wobei das Trageelement (310) drehbar angeordnet ist, um das Reaktionsgefäß zu einer Kreisbewegung anzutreiben; das Trageelement (310) durch eine Drehung um 180° gedreht wird, sodass das Reaktionsgefäß von der Transportstation (321) zur gleichmäßigen Mischstation (322) gelangt.

3. Probenanalysator nach Anspruch 2, wobei der gleichmäßige Mischmechanismus (300) ferner eine erste Übergabestation (331) und eine zweite Übergabestation (332) aufweist, wobei die Positionen der ersten Übergabestation (331) und der zweiten Übergabestation (332) sich von den Positionen der Transportstation und der gleichmäßigen Mischstation unterscheiden, das Reaktionsgefäß an der ersten Übergabestation (331) in das Element (310) eingeführt wird, und das Trageelement (310) durch eine Drehung um 180° von der ersten Übergabestation (331) zur zweiten Übergabestation (332) gelangt, um ausgegeben zu werden.

4. Probenanalysator nach Anspruch 3, wobei eine Verbindungslinie zwischen der ersten Übergabestation (331) und der zweiten Übergabestation (332) eine Verbindungslinie zwischen der Transportstation und der gleichmäßigen Mischstation schneidet und sowohl die Transportstation als auch die gleichmäßige Mischstation in einer Drehung des Tragelements (310) um 180° voneinander beabstandet sind.

5. Probenanalysator nach Anspruch 3, ferner umfassend einen ersten Greifer und einen zweiten Greifer, wobei sowohl der Inkubationsmechanismus (400) als auch die Übergabestation (321) innerhalb eines Bewegungsbereichs des ersten Greifers angeordnet sind, wobei die erste Region (410) außerhalb eines Bewegungsbereichs des zweiten Greifers angeordnet ist, die erste Übergabestation (331) innerhalb des Bewegungsbereichs des zweiten Greifers angeordnet ist und die Transportstation außerhalb des Bewegungsbereichs des zweiten Greifers angeordnet ist.

6. Probenanalysator nach Anspruch 5, wobei sich die zweite Übergabestation (332) innerhalb des Bewegungsbereichs des ersten Greifers und außerhalb des Bewegungsbereichs des zweiten Greifers befindet.

7. Probenanalysator nach Anspruch 5, wobei eine gerade Linie, die die Mittelpunkte der Transportstation (321) und der gleichmäßigen Mischstation (322) eine erste gerade Linie ist, eine gerade Linie zum Verbinden der Mittelpunkte der ersten Übergabestation (331) und der zweiten Übergabestation (332) eine zweite gerade Linie ist, sowohl die erste gerade Linie als auch die zweite gerade Linie durch den Inkubationsmechanismus (400) verlaufen, der Inkubationsmechanismus (400) eine erste Kante und eine zweite Kante an der Befestigungsaussparung (430) aufweist, die erste Gerade die zweite Kante weder überlappt noch schneidet, sodass die erste Gerade von der zweiten Kante beabstandet ist, die zweite Gerade die erste Kante weder überlappt noch schneidet, sodass die zweite Gerade von der ersten Kante beabstandet ist.

8. Probenanalysator nach Anspruch 5, wobei sich die zweite Region (420) des Inkubationsmechanismus (400) innerhalb des Bewegungsbereichs des zweiten Greifers befindet, die erste Region relativ zur zweiten Region näher an der Transportstation liegt und die zweite Region relativ zur ersten Region näher an der ersten Übergabestation (331) liegt.

9. Probenanalysator nach Anspruch 5, ferner umfassend einen Reinigungsmechanismus und einen Messmechanismus, die gegenüberliegend und unabhängig voneinander angeordnet sind und sich außerhalb des Bewegungsbereichs des ersten Greifers befinden, wobei der zweite Greifer das Reaktionsgefäß vom Inkubationsmechanismus zum Reinigungsmechanismus und vom Reinigungsmechanismus zum Messmechanismus befördert und der zweite Greifer ferner an der ersten Übergabestation (331) das Reaktionsgefäß auf dem Reinigungsmechanismus in das Tragelement (310) ein.

10. Probenanalysator nach Anspruch 5, ferner umfassend einen Tragemechanismus, der eine erste Station (221), eine zweite Station (222) und eine Reagenzstation (223) aufweist, wobei sich die zweite Station (222) innerhalb des Bewegungsbereichs des ersten Greifers, außerhalb des Bewegungsbereichs des zweiten Greifers und oberhalb der gleichmäßigen Mischstation befindet, wobei der Tragemechanismus das von der ersten Station (221) eingegebene Reaktionsgefäß zur Reagenzstation (223) transportiert, um ein Reagenz zu laden, und befördert das Reaktionsgefäß von der Reagenzstation (223) zur zweiten Station (222), um das Reaktionsgefäß an das Tragelement (310) auszugeben, und das Reaktionsgefäß auf dem Inkubationsmechanismus wird an der zweiten Station (222) in den Tragemechanismus eingeführt.

11. Probenanalysator nach Anspruch 10, wobei das Reaktionsgefäß auf dem gleichmäßigen Mischmechanismus (300) an der zweiten Station (222) in den Tragemechanismus eingeführt wird.

12. Probenanalysator nach Anspruch 10, wobei der Tragemechanismus ein Antrriebsrad, ein angetriebenes Rad und ein Förderband umfasst, das Förderband auf das Antriebsrad und das angetriebene Rad aufgesteckt ist, das Förderband eine lineare erste Kante und eine lineare zweite Kante umfasst, die erste Kante relativ zur zweiten Kante weiter vom Trageelement (310) entfernt ist, das Reaktionsgefäß von der ersten Station (221) in die erste Kante eingeführt wird und die zweite Kante das Reaktionsgefäß antreibt, um sich zwischen der zweiten Station (222) und der Reagenzstation (223) zu bewegen.

13. Probenanalysator nach Anspruch 10, ferner umfassend einen Fördermechanismus, der eine Ein-Aus-Station und eine Probenstation aufweist, wobei der Fördermechanismus das Reaktionsgefäß, das von der Ein-Aus-Station eingegeben wird, zur Probenstation befördert, um eine Probe zu laden, und das Reaktionsgefäß von der Probenstation zur Ein-Aus-Station zurückführt, um das Reaktionsgefäß an den Tragemechanismus auszugeben.

14. Probenanalysator nach Anspruch 5, wobei sich der gleichmäßige Mischmechanismus (300) und der Inkubationsmechanismus (400) auf einer Seite des Tragemechanismus befinden und sich der Fördermechanismus auf der anderen Seite des Tragemechanismus befindet.

## Revendications

1. Analyseur d'échantillons, comprenant :
un mécanisme d'incubation (400), utilisé pour réaliser l'incubation d'un liquide dans un récipient de réaction ; et
un mécanisme de mélange uniforme (300), agencé indépendamment du mécanisme d'incubation (400), et comportant une station de transport (321) et une station de mélange uniforme (322), dans lequel le mécanisme de mélange uniforme (300) comprend un élément de transport (310) destiné à transporter le récipient de réaction, et l'élément de transport (310) entraîne le récipient de réaction dans un mouvement circulaire entre la station de transport (321) et la station de mélange uniforme (322) ; et l'élément de transport (310) transporte le récipient de réaction, qui est entré de la station de transport (321), vers la station de mélange uniforme (322), afin de mélanger uniformément le liquide, et transporte le récipient de réaction de la station de mélange uniforme (322) vers la station de transport (321), afin de sortir le récipient de réaction vers le mécanisme d'incubation (400) ;
et dans lequel le mécanisme d'incubation (400) est agencé de manière fixe, le mécanisme d'incubation (400) est divisé en une première région (410) et une seconde région (420), la largeur de la première région (410) est inférieure à la largeur de la seconde région (420), de sorte que la première région (410) et la seconde région (420) entourent ensemble une encoche de montage (430), et **caractérisé en ce que**
l'élément de transport (310) est au moins partiellement logé dans l'encoche de montage (430).

2. Analyseur d'échantillons selon la revendication 1, dans lequel l'élément de transport (310) est agencé en rotation, afin d'entraîner le récipient de réaction à réaliser un mouvement circulaire ; l'élément de transport (310) est tourné de 180°, de sorte que le récipient de réaction arrive à la station de mélange uniforme (322) à partir de la station de transport (321).

3. Analyseur d'échantillons selon la revendication 2, dans lequel le mécanisme de mélange uniforme (300) comporte également une première station de transfert (331) et une seconde station de transfert (332), les positions de la première station de transfert (331) et de la seconde station de transfert (332) sont différentes des positions de la station de transport et de la station de mélange uniforme, le récipient de réaction est entré à la première station de transfert (331) dans l'élément de transport (310), et l'élément de transport (310) est tourné de 180°, de sorte que le récipient de réaction arrive à la seconde station de transfert (332) à partir de la première station de transfert (331), afin d'être sorti.

4. Analyseur d'échantillons selon la revendication 3, dans lequel une ligne de connexion entre la première station de transfert (331) et la seconde station de transfert (332) intersecte une ligne de connexion entre la station de transport et la station de mélange uniforme, et la station de transport et la station de mélange uniforme sont toutes deux espacées l'une de l'autre de 180° dans la direction de rotation de l'élément de transport (310).

5. Analyseur d'échantillons selon la revendication 3, comprenant également une première pince et une seconde pince, dans lequel le mécanisme d'incubation (400) et la station de transport (321) sont tous deux situés dans une plage de mouvement de la première pince, dans lequel la première région (410) est située au-delà d'une plage de mouvement de la seconde pince, la première station de transfert (331) est située dans la plage de mouvement de la seconde pince et la station de transport est située au-delà de la plage de mouvement de la seconde pince.

6. Analyseur d'échantillons selon la revendication 5, dans lequel la seconde station de transfert (332) est située dans la plage de mouvement de la première pince et est située au-delà de la plage de mouvement de la seconde pince.

7. Analyseur d'échantillons selon la revendication 5, dans lequel une ligne droite reliant les centres de la station de transport (321) et de la station de mélange uniforme (322) est une première ligne droite, une ligne droite reliant les centres de la première station de transfert (331) et de la seconde station de transfert (332) est une seconde ligne droite, la première ligne droite et la seconde ligne droite traversent toutes deux le mécanisme d'incubation (400), le mécanisme d'incubation (400) a un premier bord et un second bord au niveau de l'encoche de montage (430), la première ligne droite ne chevauche ni n'intersecte le second bord, de sorte que la première ligne droite est espacée du second bord, la seconde ligne droite ne chevauche ni n'intersecte le premier bord, de sorte que la seconde ligne droite est espacée du premier bord.

8. Analyseur d'échantillons selon la revendication 5, dans lequel la seconde région (420) du mécanisme d'incubation (400) est située dans la plage de mouvement de la seconde pince, la première région est plus proche de la station de transport par rapport à la seconde région, et la seconde région est plus proche de la première station de transfert (331) par rapport à la première région.

9. Analyseur d'échantillons selon la revendication 5, comprenant également un mécanisme de nettoyage et un mécanisme de mesure, agencés de manière opposée et indépendante et situés au-delà de la plage de mouvement de la première pince, dans lequel la seconde pince fait entrer le récipient de réaction du mécanisme d'incubation dans le mécanisme de nettoyage, et fait entrer le récipient de réaction du mécanisme de nettoyage dans le mécanisme de mesure, et la seconde pince fait également entrer, à la première station de transfert (331), le récipient de réaction sur le mécanisme de nettoyage dans l'élément de transport (310).

10. Analyseur d'échantillons selon la revendication 5, comprenant également un mécanisme de transport, qui comporte une première station (221), une seconde station (222) et une station de réactif (223), dans lequel la seconde station (222) est située dans la plage de mouvement de la première pince, au-delà de la plage de mouvement de la seconde pince et au-dessus de la station de mélange uniforme, le mécanisme de transport transporte le récipient de réaction, qui est entré de la première station (221), vers la station de réactif (223), afin de charger un réactif, puis transporte le récipient de réaction de la station de réactif (223) vers la seconde station (222), afin de faire sortir le récipient de réaction vers l'élément de transport (310), et le récipient de réaction sur le mécanisme d'incubation est entré à la seconde station (222) dans le mécanisme de transport.

11. Analyseur d'échantillons selon la revendication 10, dans lequel le récipient de réaction sur le mécanisme de mélange uniforme (300) est entré à la seconde station (222) dans le mécanisme de transport.

12. Analyseur d'échantillons selon la revendication 10, dans lequel le mécanisme de transport comprend une roue d'entraînement, une roue entraînée et une bande transporteuse, la bande transporteuse est gainée sur la roue d'entraînement et la roue entraînée, la bande transporteuse comprend un premier bord linéaire et un second bord linéaire, le premier bord est plus éloigné de l'élément de transport (310) par rapport au second bord, le récipient de réaction est entré de la première station (221) au premier bord, et le second bord entraîne le récipient de réaction pour se déplacer entre la seconde station (222) et la station de réactif (223).

13. Analyseur d'échantillons selon la revendication 10, comprenant également un mécanisme de convoyage, qui comporte une station d'entrée/sortie et une station d'échantillon, dans lequel le mécanisme de convoyage transporte le récipient de réaction, qui est entré de la station d'entrée/sortie, vers la station d'échantillon, afin de charger un échantillon, et renvoie le récipient de réaction de la station d'échantillon à la station d'entrée/sortie, afin de sortir le récipient de réaction vers le mécanisme de transport.

14. Analyseur d'échantillons selon la revendication 5, dans lequel le mécanisme de mélange uniforme (300) et le mécanisme d'incubation (400) sont situés d'un côté du mécanisme de transport, et le mécanisme de convoyage est situé de l'autre côté du mécanisme de transport.
